# EUROPEAN PATENT SPECIFICATION

(11) **EP 3 989 503 B1**
(45) Date of publication and mention of the grant of the patent: **03.01.2024**
(21) Application number: 20203121.7
(22) Date of filing: 21.10.2020
(51) Int. Cl.: H04L 9/40, H04L 67/141, H04M 1/2755, H04L 9/32, G06F 21/64, H04L 67/12, H04M 1/72412

(54) **COMMUNICATION METHOD AND SYSTEM**
KOMMUNIKATIONSVERFAHREN UND -SYSTEM
SYSTÈME ET PROCÉDÉ DE COMMUNICATIONS

(43) Date of publication of application: 27.04.2022
(73) Proprietor: sqanit GmbH, 82031 Grünwald (DE)
(72) Inventor: Hieronimi, Christian, 82031 Grünwald (DE); Biallowons, Benedikt, 82031 Grünwald (DE)
(74) Representative: Fleuchaus & Gallo Partnerschaft mbB

(56) References cited:
- EP-A1- 1 843 615
- WO-A1-2014/033695
- CN-A- 109 714 374

## Description

### Field of the Invention

The invention relates to a communication method and system, of particular but by no means exclusive application in initiating a mode of communication between two computing devices, such as a voice or video call.

### Background of the Invention

Access control systems to premises are known in the art. For example, CA Patent Application No. 3036529 discloses a remote gate validation system that includes a barcode reader, a speaker, and a processor configured to perform operations including receiving, using the barcode reader, a first barcode from a portable electronic device indicating a request for passage through a gate, outputting-using the speaker-an audio signal with a predetermined feature, determining that a detected feature matches the predetermined feature and, in response, facilitating passage of a holder of the portable electronic device through the gate.

Disadvantageously, however, this prior art system allows only for a mechanism to allow the requestor to be given access through a gate, but fails on-or at best very crudely allows-ver-ification of the identity of the requestor. In particular, the prior art system fails to ensure that the requestor and the recipient of the access request are both legitimate and that the interaction is validated.

Furthermore, any registration operation of the interaction between the requestor and the recipient of the request, such as obtaining a confirmation of receipt requires *in persona* interaction or is simply specious in terms of the persons involved.

Patent application CN 109 714 374 A discloses a method comprising obtaining an address identifier configured by a common gate scanned by a guest terminal. Location information of the guest terminal is obtained. A visitor access request with the address identifier and the location information is transmitted to a server. Determination is made to check whether the guest terminal meets a preset access condition according to the location information. A session communication is established between the guest terminal and a resident terminal by the server. Patent application EP 1 843 615 A1 discloses a system for contacting destination devices via first and second intermediate devices in response to information from a source devices, the source devices comprising memories for storing the information and wireless transmitters for transmitting the information, which information comprises address codes and subscriber codes. The first intermediate devices comprise wireless receivers for receiving the address codes and the subscriber codes and first network interfaces for in response to the address codes contacting and supplying the subscriber codes to second network interfaces. The second intermediate devices comprise the second network interfaces for receiving the subscriber codes and third network interfaces for in response to the subscriber codes contacting fourth network interfaces of the destination devices.

The provision of secure access and secure receipt of deliveries remain necessary, even in times in which *in persona* interactions are restricted. However, no suitable access and interaction mechanisms are available that provide a similarly high-or even higher-level of security and safety, concerning the mutual identification and the authenticity of the persons involved in the process, than traditional authentication and access control involving *in persona* interaction. This is particularly so if such interactions are required to be recorded or otherwise registered.

### Summary of the Invention

It is an object of the present invention to provide an improved access control system that allows for elevated security without *in persona* interaction, and in particular an access control system that allows controlling access and authenticating the accessing person without in *persona* interaction. It is a further object of the present invention, to allow pickup and delivery operations without *in persona* interaction in which every person in the process can be identified and every operation registered.

In the context of the description of the invention, where the description refers to a delivery, an authentication or identification of a delivery person, a recipient, or delivered goods, or the like, reference is correspondingly made to a pickup, an authentication or identification of a pickup person, a sender, or goods to be mailed, respectively.

The object of the invention is solved by a communication system according to claim 1 and a communication method according to claim 8. Aspects and embodiments of the invention are subject matter of the respective dependent claims.

According to a first aspect of the invention, there is provided a communication system, comprising:
a first computing device having a sensor and a display;
a second computing device having a display;
a data service configured to mediate communication between the first and second computing devices;
wherein the first computing device is configured to generate control data by decoding information embodied in a contactlessly readable identification device scanned with the sensor, the identification device having address data indicative of an authentication server and identification data associated with a user of a second computing device, such that the control data comprises the address data and the identification data;
the first computing device is configured to:
   a) respond to the control data by transmitting an authentication request to the authentication server, the authentication request comprising at least the identification data (and, optionally, identifying the first computing device and/or the user of the first computing device),
   b) respond to receiving an authentication and/or access token (including, for example, a token indicative of successful authentication, so functioning as an access token) from the authentication server (in the form of, for example, a token service or comprising a token service) by transmitting a contact data request for contact data associated with the identification data to the data service, the contact data being configured to allow the first computing device to establish communication with the second computing device, and the contact data request including the token,
   c) respond to receiving the contact data from the data service by transmitting a communication request to the data service according to the contact data, characterised in that the communication request is configured to prompt the data service to generate and issue a user alert or notification identifying at least a mode of communication and a user operable acceptance mechanism operable to control the second computing device to open or accept the mode of communication with the first computing device.

Thus, the user of the first computing device need not be provided with the telephone or other identifying name/number of the second device (or its user). Instead, the authentication server provides the first computing device with contact data pertaining to the second computing device and sufficient for the first computing device to identify and hence communicate with the second computing device. The access token allows the system to distinguish the users: the recited access token is associated with the first computing device (or with a user thereof) and may thus serve to identify the user of the first device.

By helping to initiate communication between the user of the first and second devices based on the information embodied in the information device, an identification/authentication of the user of the first computing device by the user of the second computing device-and *vice* versa-is enabled, without an *in persona* interaction.

In some embodiments, the first computing device is advantageously portable. It may be in the form of, for example, a mobile telephone or a tablet computer. It is also advantageous that the second computing device be portable, but this may be less important in some applications.

Implementing the invention with mobile first and/or second computing devices also provides the advantage over the prior art that a need for infrastructural installations is obviated while still ensuring or even improving over the known access control systems.

In particular, the use of personal mobile devices, such as mobile telephones or tablet computers significantly reduces the complexity of an access control system configuration, even more so in larger infrastructural objects including dozens of units, such as condominiums, business units, etc.

Moreover, the use of such personal mobile devices facilitates additional functionality such as user authentication, validation, and legitimation as described further below. Mobile devices are, however, not requirement for these types of enhanced functionality.

The identification device may comprise an indicum (such as a matrix barcode, a QR (Quick Response) code or other barcode, or an alphanumeric string) or an interrogatable beacon (such as a Bluetooth^{®} beacon, NFC beacon or other radio-beacon).

When the identification device comprises an indicum, the sensor may comprise an image sensor (such as a camera) suitable for contactlessly reading the indicium. When the identification device comprises a radio-beacon, the sensor may comprise, for example, a Bluetooth transceiver, an NFC transceiver or other transceiver suitable for contactlessly reading the radio-beacon. Hence, scanning the readable identification device may be active or passive, and may involve radio communication, polling or imaging.

The authentication server may be in the form of one or more computing devices, and may be distributed such that different tasks are handled in different locations and/or by different computing devices providing authentication services.

Optionally, the system can be configured to generate and send a further access token to, and be associated with, the second computing device (or with a user thereof) so that different functionality can be provided by the system to the second computing device. That functionality may involve maintaining account details or modifying welcome content.

In an embodiment, the first computing device is further configured to: d) display on the display a plurality of modes of communication establishable between the first computing device and the second computing device, and e) receive user input indicative of a communication mode selection selected from the modes of communication, wherein the mode of communication comprises the communication mode selection.

It should be noted that the token service (or equivalent component of the authentication server) and the data service may be combined as a token and data service. Alternatively, these services may be implemented logically separate, such as to employ services each with a single responsibility. The communication request may be configured to prompt the data service to generate and issue the user alert or notification by prompting a notification service to issue the user alert or notification.

The system may include the authentication server (or authentication service), the data service and/or the second computing device.

In an example of this and other aspects of the invention, establishing communication with the second computing device comprises establishing an SDP (Session Description Protocol) media session between the first and second computing devices (with, for example, a notification service-such as implemented by the data service-acting as a data broker between the first and second computing devices). In another example, establishing communication with the second computing device comprises establishing a WebRTC session between the first and second computing devices (such as with the data service implementing a TURN server).

In an embodiment, the method includes the second computing device receiving a further access token from the authentication server (or the authentication service), the further access token being configured to identify the second computing device as authorized to access or alter specified information pertaining to a user of the second computing device (stored on, for example, the authentication server and/or the data service).

In an embodiment, the first computing device is configured to respond to the control data by displaying on the display a plurality of selectable establishable modes of communication between the first and second computing devices, and to receive a user selection indicative of a selected mode of communication, wherein the first computing device adapts the communication request to identify the selected mode of communication. It should be noted that this request may in some examples be integrated, such that the request is configured to request that the second computing device open or accept the selected mode of communication. Alternatively, the request may comprise two sequential components: one request component that requests the opening or acceptance of a mode of communication and another request component identifying the selected mode.

In an embodiment, the first computing device is configured to respond to the control data by displaying a list identifying one or more modes of communication comprising a video call, a voice call, text messaging, image messaging, and/or remote signing of a document (that is, any one or more of these modes of communication). In one example, the list includes one or more specific modes of communication identified by the control data or the identification data.

In an embodiment, the first computing device is configured to further respond to the control data by downloading executable code, such as in the form of a PWA (Progressive Web Application), to the first computing device and executing the executable code, wherein the executable code configures the first computing device to perform any one or more of steps (a) to (c) (or, in embodiments that includes steps (d) and (e), any one or more of steps (a) to (e)). The executable code (which may also be termed control code) may be in any suitable format, including a Progressive Web Application (PWA) or an app.

In an embodiment, the second computing device is configured to display an identity of the first computing device or of a user registered as associated therewith, such as in, or in association with, the user alert or notification.

In an embodiment, the sensor comprises a camera and the first computing device is controllable to capture a video image or still image of a document (including, for example video data or a still image extracted from video data, and optionally including both a video image and a still image) with the camera and to transmit to the second computing device the image of the document and an execution request, the execution request being configured to prompt the second computing device to display the image of the document and to issue a user alert or notification requesting execution of the document by digital or electronic signature, and the first computing device is configured to issue a user alert or notification confirming execution of the document in response to receiving an execution confirmation from the second computing device. In one example, the first computing device is configured to receive the signature and to store, or initiate storage of, the digital or electronic signature or a hash of the digital or electronic signature (e.g. a hash of an image/file that encodes the signature), in association with the image, a portion of the image, or a digital document of which the image is a representation (e.g. in a standard or `traditional' database, such as might be found in a conventional transactional database system, or in a distributed ledger database such as a blockchain).

In this and in the other aspects of the invention, the digital or electronic signature may comprise, for example, a traditional signature or other confirmative identifier recorded or applied digitally or electronically, biometric input (such as a fingerprint, facial recognition data, iris scan, retinal scan, etc.), a PIN/password/passcode, or identification data. Signing may thus be effected in many ways, such as by signing a touch screen or the like by finger or stylus, confirming by entering a passcode/PIN or password, or by biometric acknowledgement, etc.

In an embodiment, the second computing device is configured to respond to receiving the execution request by displaying the image of the document on a display of the second computing device, and to receive user input comprising the digital or electronic signature inputted into the second computing device by the user of the second computing device while or after the second computing device displays the image of the document. In one example, the second computing device is configured to store, or initiate storage of, the digital or electronic signature or a hash of the digital or electronic signature, in association with the image, a portion of the image, or a digital document of which the image is a representation (e.g. in a standard database, or in a distributed ledger database such as a blockchain).

In an embodiment, the display of the second computing device is a touch screen, and the second computing device is configured to receive the digital or electronic signature by user interaction with the display of the second computing device (such as the user signing the display with a finger or a stylus) and only while the second computing device displays the image of the document.

The image of the document may comprise video data or be extracted from video data.

In an embodiment, the first and/or second computing device is further configured to generate user authentication data suitable for use in checking an identity of a user of the first and/or second computing device from a user identifier inputted into the first and/or second computing device by the user of the first and/or second computing device; and to transmit the user authentication data to the authentication server for authentication against corresponding user validation data.

The user identifier may assume any suitable form that can be inputted by the user into the respective (i.e. first and/or second) computing device, such that the user authentication data therefrom can be checked by the authentication server against corresponding user validation data. Hence, the user identifier may comprise, for example, a name (whether of the user, an employer of the user, or otherwise), a digital or electronic signature, a biometric input, a PIN/password/passcode, or other identifying information. The capture of the user identifier, the generation of the user authentication data, and the transmission of the user authentication data to the authentication server may be controlled by, for example, an app or the aforementioned executable code.

In a related embodiment, the system includes the second and/or first computing device, and the second first and/or second computing device is configured to respond to receiving an authentication message from the authentication server by displaying an authentication notification, the authentication message being generated by the authentication server in response to validating the user authentication data of the first and/or second computing device against the user validation data.

Thus, a user of the respective (i.e. second and/or first) computing device can be informed, by the authentication notification, that the user of the first and/or second computing device is a valid or even a specified legitimate user. This may be of great utility to the users of the computing devices in deciding whether to accept, for example, a delivery that the user of the first computing device wishes to make, or to remotely admit the user of the first computing device to a delivery or other location (such as the premises of the user of the second computing device), or to ensure that the recipient of a delivery is legitimate, such as, for example, in cases of restricted deliveries of pharmaceuticals or age restricted deliveries.

The user of the second computing device may facilitate admission, for example, by remotely unlocking (such as with an app on the second computing device) a door or mailbox, or by sending the first computing device a passcode for unlocking a door or mailbox (such as by operating a keypad connected to a lock release mechanism of the door or mailbox).

A correspondingly configured authentication server or service may also be configured not only to authenticate the user of, for example, the first computing device but also to authenticate such user if the authentication request is made at a time at which an authentication of the respective user of the first device is unexpected.

For example, the authentication server or service may be configured to verify against a delivery protocol and determine that a certain package is indeed due for delivery by the user of the first computing device. Only in such case when the delivery protocol confirms that the user of the first computing device is indeed at the point of delivering such package would the authentication server or service return a successful authentication and thus indicate to the user of the second computing device in the authentication notification, that the user of the first computing device is validated and legitimately requesting access.

In certain embodiments, the identification device is valid for a predefined or user-controllable period. In some embodiments, the identification device is valid for a predefined number of uses, either in total or within a predefined or user-controllable period.

According to a second aspect of the invention, there is provided a communication method according to claim 8.

Optionally, the method includes generating and sending a further access token to, and to be associated with, the second computing device (or with a user thereof) so that different functionality can be provided to the second computing device.

In an embodiment, the method comprises: the first computing device displaying on the display a plurality of modes of communication establishable between the first computing device and the second computing device, and the first computing device receiving user input indicative of a communication mode selection selected from the modes of communication, wherein the mode of communication comprises the communication mode selection. In an embodiment, the data service issues the user alert or notification by prompting a notification service to issue the user alert or notification in response to a prompt by the communication request.

In an embodiment, the method comprises the first computing device responding to the control data by displaying on the display a plurality of selectable establishable modes of communication between the first and second computing devices, and receiving a user selection indicative of a selected mode of communication, wherein the first computing device adapts the communication request to identify the selected mode of communication.

In an embodiment, the method comprises the first computing device responding to the control data by displaying a list identifying one or more modes of communication comprising a video call, a voice call, text messaging, image messaging, and/or remote signing of a document (that is, any one or more of these modes of communication). In an example, the list includes one or more specific modes of communication identified by the control data or the identification data.

In an embodiment, the method comprises the first computing device further responding to the control data by downloading executable code, such as in the form of a PWA (Progressive Web Application), to the first computing device and executing the executable code, wherein the executable code configures the first computing device to perform any one or more of the steps of the method.

In an embodiment, the method comprises the second computing device displaying an identity of the first computing device or of a user registered as associated therewith, such as in, or in association with, the user alert or notification.

In an embodiment, the sensor comprises a camera and the method comprises the first computing device capturing a video image or still image of a document (i.e. videoing or photographing the document) with the camera and transmitting to the second computing device the image of the document and an execution request, the second computing device displaying the image of the document and issuing a user alert or notification requesting execution of the document by digital or electronic signature in response to a prompt by the execution request, and the first computing device issuing a user alert or notification confirming execution of the document in response to receiving an execution confirmation from the second computing device.

In an example, the method comprises the first computing device receiving the digital or electronic signature and storing, or initiating storage of, the digital or electronic signature or a hash of the digital or electronic signature, in association with the image, a portion of the image, or a digital document of which the image is a representation (e.g. in a standard database, or in a distributed ledger database such as a blockchain).

In an embodiment, the method comprises the second computing device: responding to receiving the execution request by displaying the image of the document on a display of the second computing device, and receiving user input comprising the digital or electronic signature inputted into the second computing device by the user of the second computing device while or after the second computing device displays the image of the document.

In an example, the method comprises the second computing device storing, or initiating storage of, the digital or electronic signature or a hash of the digital or electronic signature, in association with the image, a portion of the image, or a digital document of which the image is a representation (e.g. in a standard database, or in a distributed ledger database such as a blockchain).

In one example, the display of the second computing device is a touch screen, and the method comprises the second computing device receiving the digital or electronic signature by user interaction with the display of the second computing device (such as the user signing the display with a finger or a stylus) and only while the second computing device displays the image of the document.

The image of the document may comprise video data or be extracted from video data. The method may include extracting the image from the video data.

In an embodiment, the method comprises
the first and/or second computing device generating user authentication data suitable for use in checking an identity of a user of the first and/or second computing device from a user identifier inputted into the first and/or second computing device by the user of the first and/or second computing device; and
the first computing device transmitting the user authentication data to the authentication server for authentication against corresponding user validation data.

In a related embodiment, the method comprises the second and/or first computing device responding to receiving an authentication message from the authentication server by displaying an authentication notification, the authentication message being generated by the authentication server in response to validating the user authentication data against the user validation data.

### Brief Description of the Drawing

In order that the invention be better understood, embodiments will now be described, by way of example, with reference to the accompanying drawing in which:
Figure 1 is a schematic view of a communication system according to an embodiment of the present invention;
Figure 2 is a schematic view of the first computing device of the system of figure 1;
Figure 3 is a schematic view of the second computing device of the system of figure 1;
Figure 4 is a schematic view of the authentication server of the system of figure 1;
Figure 5A is a view of an exemplary welcome screen displayable by the first computing device of the system of figure 1;
Figure 5B is a view of a communication request screen displayable by the second computing device of the system of figure 1;
Figure 6A is a sequence diagram of the steps of the first computing device of the system of figure 1 when initiating a call;
Figure 6B is a practical example of the sequence of steps illustrated in figure 6A, by reference to notional first and second users;
Figures 7A to 7C schematically illustrate the sequence of steps of the first computing device whereby a user of the first computing device requests execution of a document by a user of the second computing device; and
Figures 8A and 8B schematically illustrate the sequence of steps of the second computing device whereby a user of the second computing device signs a document of the user of the first computing device.

### Description of the Invention

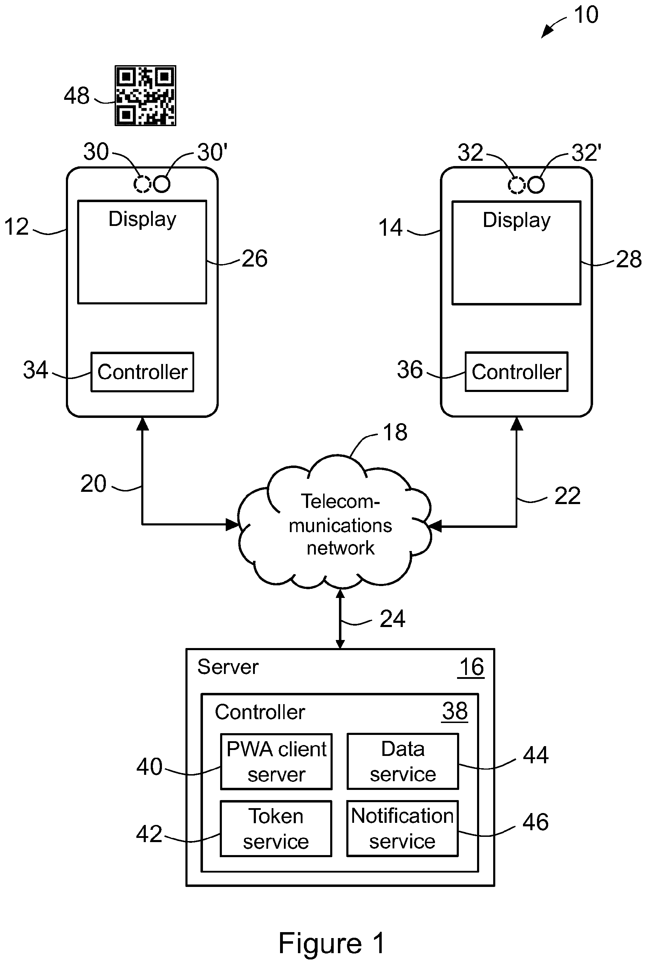

Figure 1 is a schematic view of a communication system 10 according to an embodiment of the present invention. Communication system 10 includes first and second computing devices in the form of first and second mobile devices 12 and 14 (e.g. mobile telephones or tablet computers), and a server 16. First and second mobile devices 12, 14 and server 16 communicate via a telecommunications network, though this is not typically regarded as a part of system 10. In this example, the telecommunications network is in the form of a mobile telephony network 18, which includes both wireless and wired communication links-collec-tively indicated at 20, 22 and 24.

It should be appreciated that system 10 may include a plurality of first computing devices (e.g. plural first mobile devices 12) and/or a plurality of second computing devices (e.g. plural second mobile devices 14). However, for simplicity the following description generally refers to only one of each.

Each of first and second mobile devices 12,14 includes a touch-screen display 26, 28, a sensor in the form of a rear camera 30, 32, and a front camera 30', 32'. Each of first and second mobile devices 12, 14 includes a controller 34, 36 (described in more detail below) configured to control the respective device 12, 14 to perform the functions described below.

Server 16 includes a controller 38, configured to perform authentication, data mediation and other functions. In particular, controller 38 includes a client server in the form, in this embodiment, of a PWA (Progressive Web Application) client server 40 configured to provide executable code (in this embodiment in the form of a PWA) to first mobile device 12, so that first mobile device 12 can act as a PWA client. Controller 38 also includes an authentication server in the form of a token service 42 (configured to generate authentication/access tokens and refresh tokens), a data service 44 (which mediates communication between first and second mobile devices 12, 14) and a notification service 46 (configured to send various notifications to registered users of system 1), as are described in greater detail below.

Controller 34 of first mobile telephone 12 is configured to decode information embodied in an identification device in the form, in this embodiment, of an indicium (such as a barcode)-in this example comprising a QR code 48, when imaged by first mobile device 12. QR code 48 encodes data including an address of server 16 and identification data associated with the user of second mobile device 14.

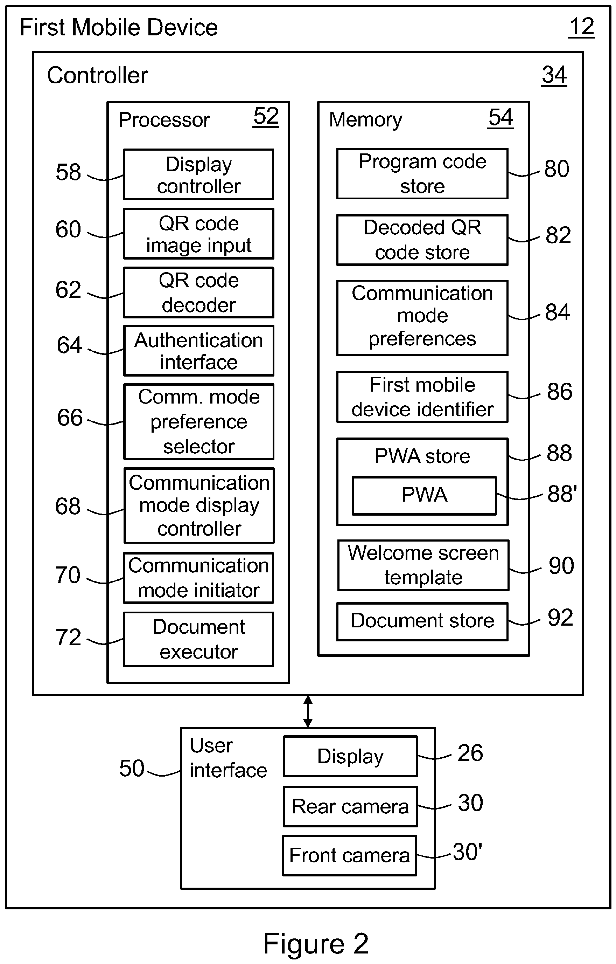

Figure 2 is a schematic view of first mobile device 12. First mobile device 12 includes the aforementioned controller 34 and a user interface 50 (which includes display 26, rear camera 30 and front camera 30'). Controller 34 includes a processor 52 and a memory 54.

Processor 52 includes or implements several native elements: a display controller 58, a QR code image input 60 and a QR code decoder 62. In addition, when provided with and executing a suitable PWA (discussed below), processor 52 of first mobile device 12 implements an authentication interface 64, a communication mode preference selector 66, a communication mode display controller 68, a communication mode initiator 70, and a document executor 72.

Memory 54 includes a program code store 80 (with computer code that implements the native functions of first mobile device 12), a decoded QR code store 82, a communication mode preferences 84, a first mobile device identifier 86, a PWA (Progressive Web Application) store 88 (for storing a PWA 88'), a welcome screen template 90 and a document store 92. Communication mode preferences 84 stores the preferred communication mode(s) of a user of first mobile device 12; these can be modified with communication mode preference selector 66 but are, by default, all the communication modes available on first mobile device 12 (e.g. video telephony, voice telephony, voice over IP (VOIP), short message service (SMS)). First mobile device identifier 86 comprises data that identifies first mobile device 12, such as a MAC address, a SIM serial number (ICCID) or an international mobile subscriber identity (IMSI).

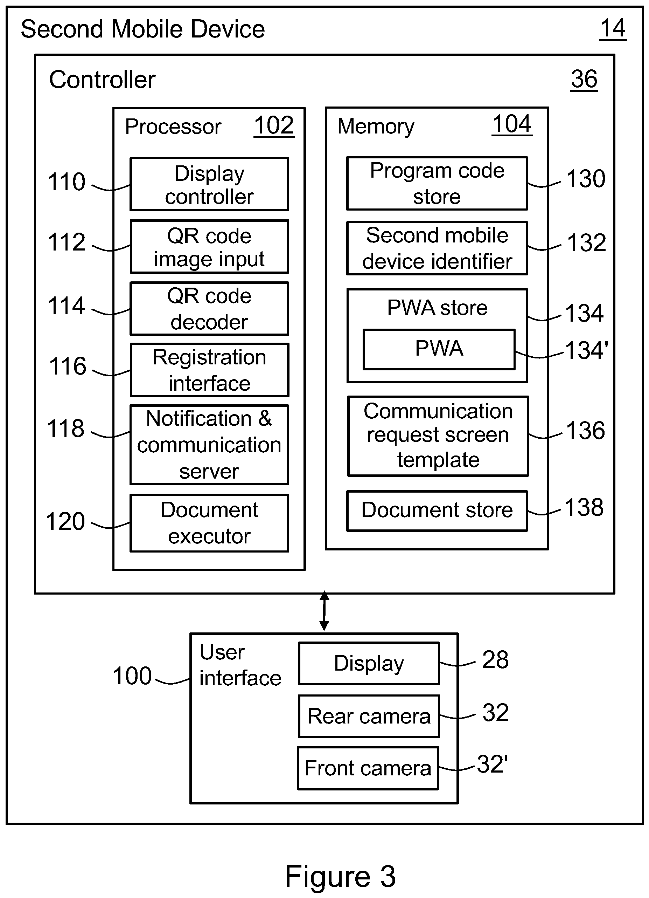

Figure 3 is a schematic view of second mobile device 14. Second mobile device 14 includes controller 36 and a user interface 100 (which includes display 28, rear camera 32 and front camera 32'). Controller 36 includes a processor 102 and a memory 104.

Processor 102 includes or implements, as native elements, a display controller 110, a QR code image input 112, and a QR code decoder 114. When provided with and executing a suitable PWA (discussed below), processor 102 of second mobile device 14 also includes a registration interface 116, a notification and communication server 118, and a document executor 120.

Memory 104 includes a program code store 130 (with computer code that implements the native functions of second mobile device 14), a second mobile device identifier 132, a PWA (Progressive Web Application) store 134 (for storing a PWA 134'), a communication request screen template 136 and a document store 138. Second mobile device identifier 132 comprises data that identifies second mobile device 14, such as a MAC address, a SIM serial number (ICCID) or an international mobile subscriber identity (IMSI), though this data is optional as-in many embodiments-such data is not required in the establishment of communication between first and second mobile devices 12,14.

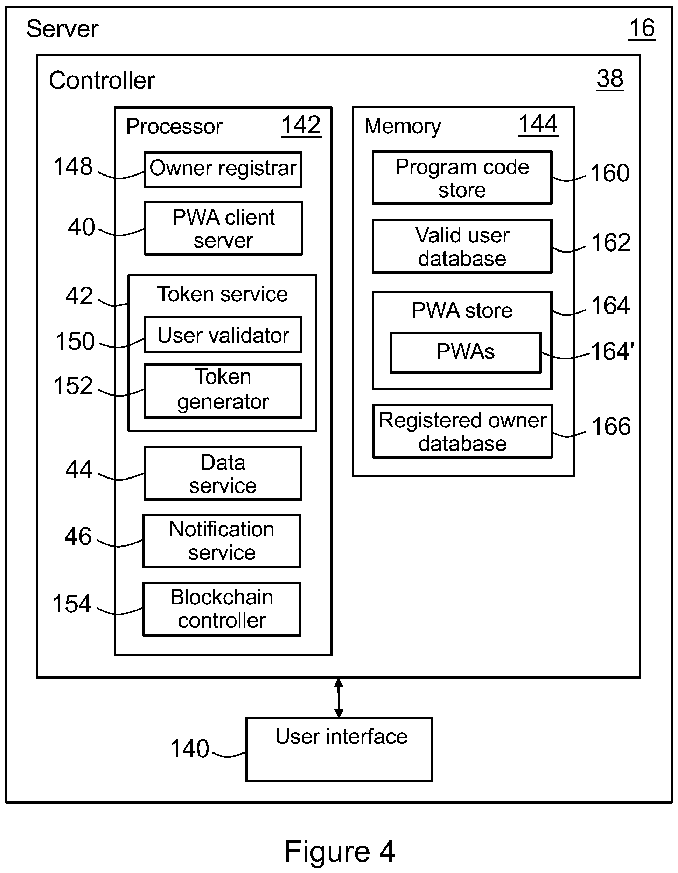

Figure 4 is a schematic view of server 16, which includes controller 38 and a user interface 140. Controller 38 includes a processor 142 and a memory 144.

Processor 142 includes or implements an owner registrar 148, PWA client server 40, token service 42 (which includes a user validator 150 and a token generator 152), data service 44, and a notification service 46.

Token service 42 is responsible for handling QR-Code/user authentication processes (e.g. validating credentials and creating access tokens). Data service 44 mediates data communication, including handling dynamic assets (viz. data that are not static types, including images, videos and documents). It should be understood, however, that data service 44 may be regarded as optional to system 10, because system 10 may instead employ one or more external services to provide this functionality, such as the messaging and call services provided by WhatsApp orViber. A mixture of both is also envisaged, in which data service 44 communicates with an external service, or in which data service 44 mediates some types of communications and an external service (or services) others mediates some types of communications.

Notification service 46 handles notification related tasks. It is configured in this embodiment to establish WebSocket channels (see https://tools.ietf.org/html/rfc6455) between itself and the clients (i.e. second mobile device(s) 14), send mail and WebPush notifications (see https://w3c.github.io/push-api/).

Processor 142 also includes a distributed ledger database controller for controlling the storage of data in a distributed ledger database. The distributed ledger database controller is, in this example, in the form of a blockchain controller 154 for controlling the storage of data in a blockchain. It will be noted that variant embodiments are envisaged in which system 10 stores data in a more conventional transactional database system; in such embodiments, processor 142 will include a storage controller (instead of the distributed ledger database controller) for controlling the storage of data (including the storage of array of data, as discussed below) to such a transactional database system.

Memory 144 includes a program code store 160 (with computer code that implements the native functions of server 16), a first user database in the form of valid user database 162 (of valid users of first mobile devices 12), a PWA store 164 (storing PWAs 164'), and a second user database in the form of registered owner database 166 (of registered users of second mobile devices 14, including-for each of the owners-contact data indicative of their respective second mobile device 14, in the form of respective second mobile device identifier 132).

In use, a user of second mobile device 14 registers with system 10 by imaging QR code 48. QR code image input 112 of second mobile device 14 is configured to receive an image of QR code 48, and to control second mobile device 14 to open the address-server 16-contained in the QR code 48 (thereby also sending second mobile device identifier 132 to server 16). As a result, server 16 provides second mobile device 14 with a copy of a PWA 164' from PWA store 164, which is saved by first mobile device 12 as PWA 134' in PWA store 134, and is then executed by processor 102 of second mobile device 14 such that second mobile device 14 acts as a PWA client that includes registration interface 116, notification and communication server 118, notification server 120, and document executor 120.

Owner registrar 148 of server 16 compares second mobile device identifier 132 with registered owner store 166, and determines that QR code 48 has not to that point been associated with a specific user or device (whether or not other QR codes are recorded as associated with the user of second mobile device 14). Owner registrar 148 responds by sending a command to PWA 134' to initiate a registration procedure by executing registration interface 116. This procedure, of conventional form, entails registering the user of second mobile device 14 (if not already registered and identified in registered owner store 166), and registering QR code 48 and second mobile device 14 in association with that user (such as by identifying the user by reference to second mobile device identifier 132).

During the registration process, the user of second mobile device 14 is also prompted to identify valid users, being first mobile devices(s) 12 (or users associated with such devices) authorized by the user of second mobile device 14 to attempt to communicate with second mobile device 14 using QR code 48 and system 10. The user of second mobile device 14 may optionally skip this step, thereby authorizing all first mobile devices(s) 12 (or users thereof).

The user of second mobile device 14 may display one or more copies of QR code 48 on whatever objects or surfaces he or she wishes. When the user of first mobile device 12 subsequently wishes to communicate with the user of second mobile device 14, he or she may now do so without possessing or being shown the contact details, telephone number or username of the user of the second mobile device 14, as follows.

The user of first mobile device 12 images QR code 48 (or an instance thereof) using rear camera 30 of first mobile device 12. QR code image input 60 of first mobile device 12 receives the image of QR code 48 from rear camera 30, and passes the image to QR code decoder 62. QR code decoder 62 is configured to decode the QR code, to output the decoded QR code data to decoded QR code store 82, and to control first mobile device 12 to open the address contained in the QR code 48. As a result, server 16 receives first mobile device identifier 86 and provides first mobile device 12 with a copy of a PWA 164' from PWA store 164, which is saved by first mobile device 12 as PWA 88' in PWA store 88, and is then executed by processor 52 of first mobile device 12 such that first mobile device 12 acts as a PWA client that includes authentication interface 64, communication mode preference selector 66, communication mode display controller 68, communication mode initiator 70, and document executor 72.

Authentication interface 64 is configured to send an authentication request to server 16, and owner registrar 148 of server 16 is configured to respond to such a request by checking QR code 48 against registered owner database 166, so to ascertain whether QR code 48 has been registered as associated with a mobile or other computing device (second mobile device 14 in this example) or with a user thereof. User validator 150 also responds to the request by checking whether first mobile device 12 is authorized to use QR code 48 (and hence system 10) to communicate with second mobile device 14. User validator 150 does so by checking first mobile device identifier 86 against users recorded in valid user store 162 as authorized with respect to QR code 48 and/or second mobile device 14. (It will be noted that, by default or by selection of the user of second mobile device 14, all first mobile devices 12 may be deemed authorized to use QR code 48.)

If QR code 48 is registered as associated with a mobile or other computing device and if the identity of first mobile device 12 is authenticated (or deemed authenticated), token generator 152 of server 16 responds by generating an authentication or access token indicating that first mobile device 12 is an authenticated entity and hence is granted access to further use of system 10, and sends the token to PWA 88'.

In this example, token generator 152 is configured to generate tokens in the JSON web token (JWT) format (based on open standard RFC 7519). The authentication/access tokens are used by PWA 88' to authenticate subsequent requests send by first mobile device 12 to server 16 (and, if an external server is used instead of or as well as data service 44, to the external server). (Although not depicted in the figures, token generator 152 also generates refresh tokens, which are used to create new authentication/access tokens as subsequently required, to avoid a particular user having to repeatedly provide login or other credentials.) A suitable implementation is OAuth 2.0 Authorization Flow (see https://tools.ietf.org/html/rfc6749) with the Resource Owner Password Credentials Grant Type (see https://tools.ietf.org/html/rfc6749#section-4.3).

The authentication/access token is passed to authentication interface 64, which responds by controlling communication mode initiator 70 to send a contact data request to server 16, requesting the second mobile device identifier(s) 132 associated with the owner of QR code 48. This request is sent to data service 44 (or its external equivalent), which responds by returning the requested second mobile device identifier(s) 132 and optionally 'interface customization data' configured to facilitate customization of a screen to be displayed by first mobile device 12 to its user.

Communication mode initiator 70 responds to receiving the second mobile device identifier(s) 132 (and any interface customization data) by controlling first mobile device 12 to display an instance of welcome screen template 90, customized by communication mode display controller 68 according to communication mode preferences 84 and according to any interface customization data.

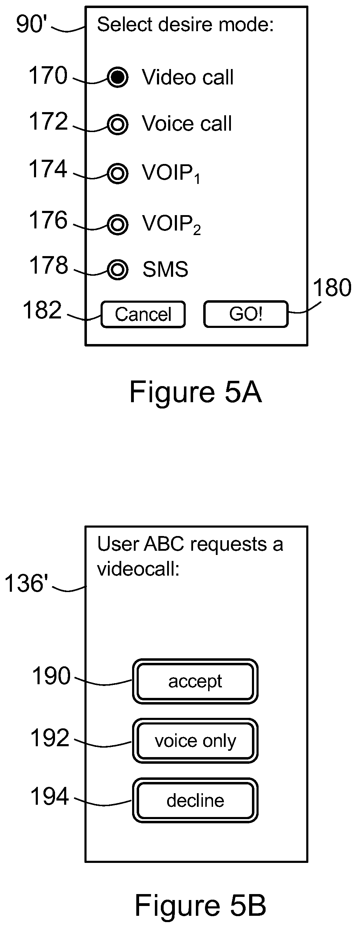

Welcome screen template 90 displays the communication mode(s) stored in communication mode preferences 84, and prompts the user of first mobile device 12 to select a mode of communication (such as by displaying radio or other option buttons) and to request that the selected mode be initiated (such as by tapping on a suitable button). An exemplary welcome screen 90' based on welcome screen template 90 is shown schematically in figure 5A. Welcome screen 90' includes five radio buttons 170 to 178, corresponding to five modes of communication: video call 170, voice call 172, VOIP₁ (e.g. WhatsApp (trade mark)) 174, VOIP₂ (e.g. Viber (trade mark)) 176 and SMS 178. The user makes his or her selection, then taps "GO!" button 180 to initiate the selected mode of communication (or "Cancel" button 182 to terminate the process).

The user's request is passed to communication mode initiator 70, which responds by:
i) in the case a texting mode or the like: opening a free text box in which the user can compose a text message and then transmitting that message as a push message to second mobile device 14 (being the device identified by second mobile device identifier 132) when the user of first mobile device 12 activates a send button, or
ii) in the case of a video call, voice call, VOIP or the like: controlling first mobile device 12 to send to second mobile device 14 (being the device identified by second mobile device identifier 132) a push message requesting a call of the selected type.

In the former scenario, notification and communication server 118 of second mobile device 14 responds to receiving the message by controlling second mobile device 14 to display a notification on display 28; the notification alerts the user of the second mobile device that a message has been received from first mobile device 12 and/or the user thereof, and includes buttons or the like that allow the user of second mobile device 14 to control notification and communication server 118 to accept or decline to accept that the message. Notification and communication server 118 controls second mobile device 14 display the message on display 28 only if the user selects 'accept.'

In the latter scenario, notification and communication server 118 of second mobile device 14 responds to the push message (*viz.* the call request) by controlling of second mobile device 14 to display a notification on display 28 that notifies the user of second mobile device 14 that a call is requested. The notification is in the form of a communication request screen that includes the identity of first mobile device 12 and/or of the user thereof, and buttons or the like that indicate the type of call being requested and that are activatable by the user of second mobile device 14 to accept or decline the request. An exemplary communication request screen 136' based on communication request screen template 136 is shown schematically in figure 5B. Communication request screen 136' identifies the user of the first mobile device ('ABC') and that a 'videocall' is requested. Communication request screen 136' includes, in this example, three buttons: an 'accept' button 190 (with which the user can accept the requested call), a `voice only' button 192 (with which the user can accept the call, but without video), and a 'decline' button 194 (with which the user can decline to accept the requested call). If the user accepts the call with video, notification and communication server 118 responds by controlling second mobile device 14 to activate front camera 32' and commencing call (in response to which first mobile device 12 activates front camera 30' thereof).

It should be noted that second mobile device 14 may be, in some examples, one of a plurality of second mobile devices 14 associated with QR code 48. For example, the user of second mobile device 14 may register the mobile device of her or her spouse in registered owner database 166 of server 16. If so, a request by the user of first mobile device 12 to communicate with second mobile device 14 will be sent to all second mobile devices 14 associated with the owner of QR code 48, all of the users of the second mobile devices 14 will be sent a notification of that request, and any of the users of the respective second mobile devices 14 can accept the request. Communication will be then established with whichever of the second mobile devices 14, if any, first accepts the request (whether or not other such users decline to accept the request).

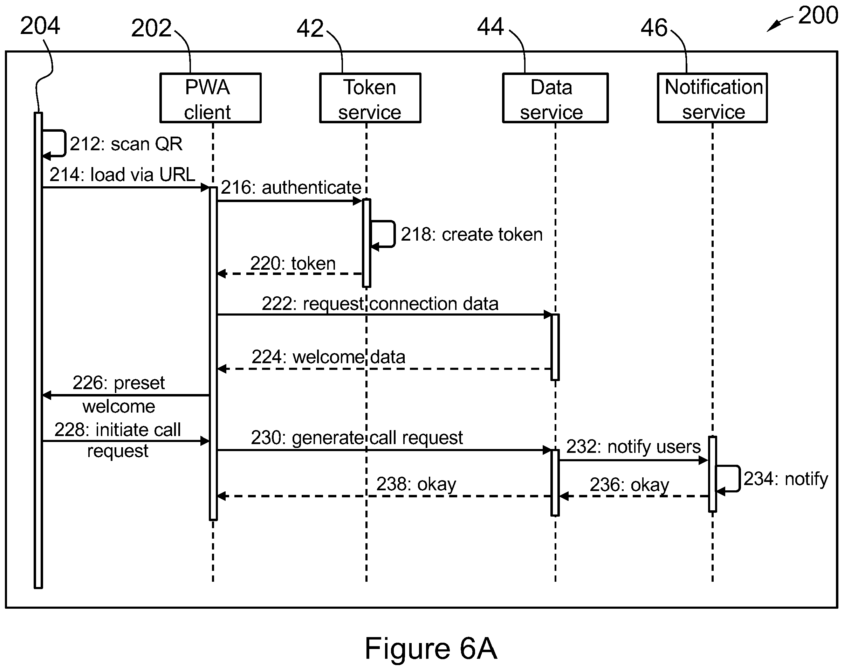

Figure 6A is a sequence diagram 200 of the steps of first mobile device 12 when initiating a call in this manner. Sequence diagram 200 depicts the core functional components of system 10: a PWA client 202 (embodied as first mobile device 12 after it has been provided with PWA 88' by PWA client server 40), token service 42, data service 44 (which may alternatively be in the form of an external service or services, or a combination of data service 44 and one or more external services) and notification service 46. A user of first mobile device 12 is represented at 204.

Thus, it will be seen that system 10 is separated into different services, each responsible for different tasks. and each may be embodiment in forms differing from those detailed herein-as will be appreciated by those skilled in the art.

Referring to figure 6A, at step 212, the user scans QR code 48 using first mobile device 12. At step 214, first mobile device 12 contacts server 16 and downloads a copy of PWA 164', thereby becoming PWA client 202. At step 216, first mobile device 12-as PWA client 202-sends a request for authentication to token service 42; token generator 152 of token service 42 responds (if authentication is successful) by, at step 218, generating an authentication or access token. At step 220, token service 42 sends the token to PWA client 202.

At step 222, in response to receiving the authentication token, PWA client 202 sends a request for connection data to data service 44. The request includes the access token, which is configured to allow identification of first mobile device 12. After receiving the access token, second mobile device 14 is able to retrieve the QR code data. The connection data includes the access token, and optionally the aforementioned 'interface customization data'. At step 224, data service 44 responds by returning the requested connection data.

At step 226, PWA client 202 displays on display 26 of first mobile device 12 a screen with a predefined welcome message (customized as described above), including available modes of communication for user selection. At step 228, the user enters that selection and thereby initiates a call request and, at step 230, PWA client 202 generates a call request, which it sends to data service 44.

Data service 44 responds, at step 232, by sending a notification of the call request to the or all second mobile devices 14 associated with the owner of QR code 48. At step 234, the (or each) second mobile device 14 displays the notification to the user, including prompting the user whether to accept or decline the requested communication. At step 236, in response to a user of the (or a) second mobile device 14 controlling his or her device to accept the requested communication, notification service 46 sends an 'okay' notification to data service 44. At step 238, data service 44 responds by sending an 'okay' notification to PWA client 202-and the requested communication commences. (It will be appreciated that, if no user of a second mobile device 14 accepts the call request notification, the process ends without establishing the communication requested by the user of first mobile device 12.)

Note that, in this embodiment, data service 44 does not store information identifying the second mobile device 14 of a traditional kind (e.g. a telephone number or hardware related information), as such information is not required to initiate video or other calls between first and second mobile devices 12,14. Instead, in this embodiment, first and second mobile devices 12, 14 communicate via data service 44 acting as a broker) or via an established standard, such as WebRTC.

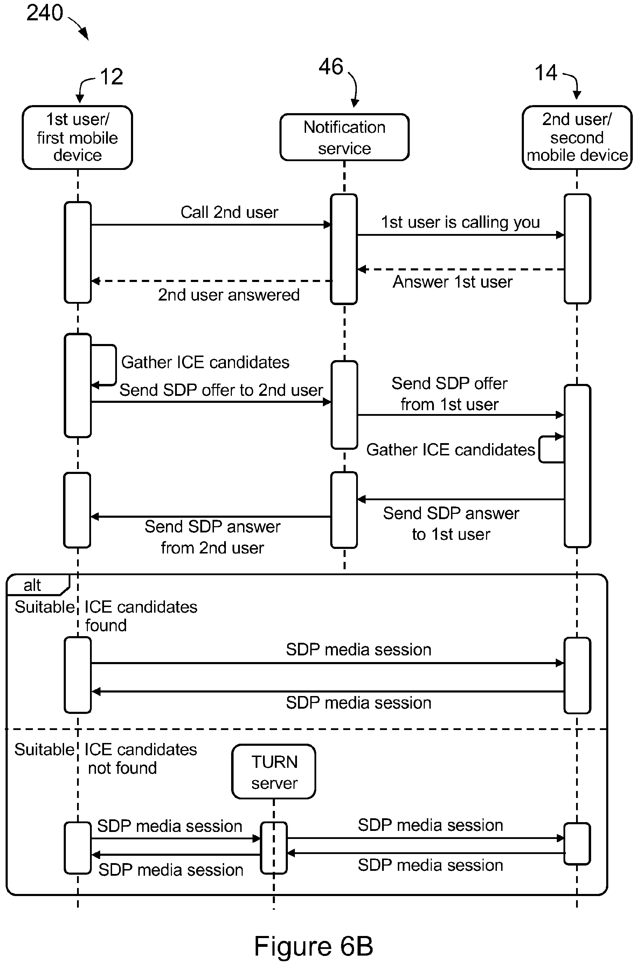

Figure 6B is a practical example of the sequence of steps illustrated in figure 6A, by reference to a notional first user (that is, of first mobile device 12) and a notional second user (that is, of second mobile device 14). In the example of figure 6B, first and second mobile devices 12, 14 communicate via notification service 46 (acting as a data broker) or via a WebRTC session (with data service 44 implementing a TURN server, with call data-including video data-send between first and second mobile devices 12, 14 via the TURN server). Data service 44 is needed before the call/WebRTC is established: it returns the information as to which two accounts/users should be involved in the call. This information is part of the welcome data included in the response from data service 44 after first mobile device 12 requests the connection data.

Thus, figure 6B is a simplified sequence diagram 240 of an SDP (Session Description Protocol) media session establishment between first mobile device 12 and second mobile device 14. The SDP media session is established directly if one or more suitable ICE candidates are found or, if not, as a WebRTC session via the TURN server.

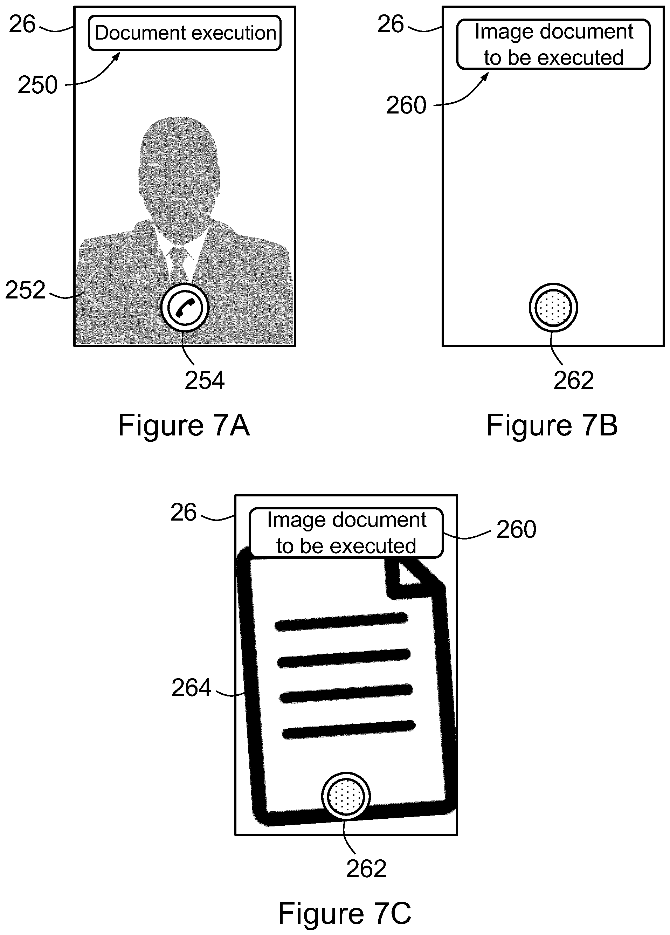

System 10 also facilitates the remote digital or electronic signing of documents, allowing a user of second mobile device 14 to digitally or electronically sign or otherwise execute a document of a user of first mobile device 12 remotely. Referring to figure 7A, communication mode initiator 70 is configured such that, after a mode of communication has been commenced between the users of the first and second mobile devices 12,14, first mobile device 12 is controlled to additionally display a document execution control button 250 (labelled, for example, `Document execution'), which may be superimposed on the image 252 of the user of second mobile device 14. A`terminate call' button 254 is also displayed.

When document execution control button 250 is tapped or otherwise activated by the user of first mobile device 12, document executor 72 responds by initiating and conducting the following procedure for remotely digitally or electronically signing a document.

Referring to figure 7B, document executor 72 responds by switching from front camera 30' input mode to rear camera 30 input mode, and by displaying on display 26 of first user mobile device 12 a notification 260 indicating that the user should capture a video image or still image (depending on the embodiment), with rear camera 30, of the document to be digitally or electronically signed. Document executor 72 also controls the display of a shutter release button 262 for initiating video image or still image capture with rear camera 30.

Document executor 72 also sends a notification to document executor 120 of second mobile device 14, to activate document executor 120 in a remote signing mode-and thereby to standby for an image of a document that is required to be digitally or electronically signed.

Referring to figure 7C, once the user has directed rear camera 30 of first mobile device 12 at the document such that an image 264 of the document is shown on display 26, the user activates shutter release button 262 to commence capture of a video image or still image (depending on the embodiment) of the document. In the former case, a video stream of the document is then fed to second mobile device 14; in the latter case, a still image is sent to second mobile device 14.

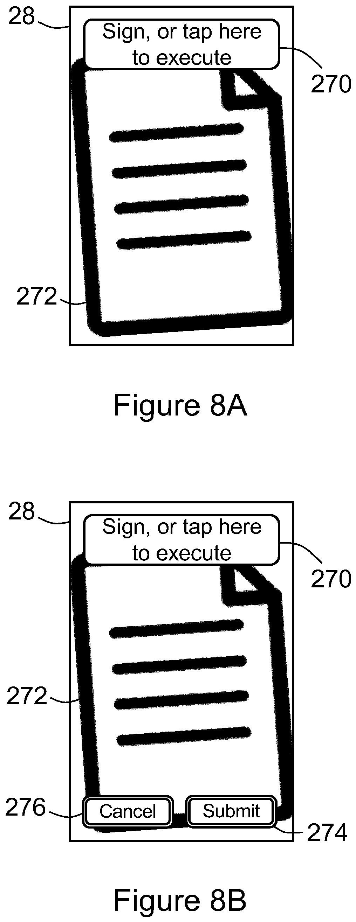

Referring to figure 8A, second mobile device 14 receives the video stream or still image of the document and displays it 272 on display 28 of second mobile device 14. Document executor 120 of second mobile device 14, operating in remote signing mode, displays a notification 270 indicating that the user should digitally or electronically sign the document either by manually signing on the display 28, such as with a finger or stylus, or by tapping notification 270.

Referring to figure 8B, when document executor 120 detects an input either on the touch-screen display 28 or the tapping of notification 270, document executor 120 responds by displaying a 'submit' button 274 and a `cancel' button 276. Once the user has completed digitally or electronically signing (whether on touch-screen display 28 or by tapping notification 270), the user then taps the 'submit' button 274 to complete signing/execution of the document (or the `cancel' button 276 to terminate the execution process).

Document executor 120 responds to the activation of the 'submit' button 274 by sending a confirmation signal to first mobile device 12 (which in turn responds by displaying a confirmation of execution notification to the user thereof). Document executor 120 also responds by sending an array of data to server 16. The array of data includes (i) either an excerpt of the video stream (e.g. a frame captured at or about the time the user activated the 'submit' button 274) or a copy of the still image, (ii) either the signature (if the user signed manually) or metadata indicating that the user tapped the notification 270, (iii) first mobile device identifier 86, (iv) second mobile device identifier 132, and (v) an execution timestamp. These data are formatted or flagged so as to identify them as comprising a document (or, strictly, an image thereof) provided by the user of first mobile device 12 and digitally or electronically signed by the user of second mobile device 14.

Blockchain controller 154 of server 16 controls the storage of the array of data in a blockchain.

While there have been described what are believed to be the preferred embodiments of the invention, those skilled in the art will recognize that other and further modifications may be made thereto without departing from the invention.

For example, it will be noted that the aforementioned authentication server performs four principal and distinct functions: it acts as a PWA client server, as a token service, as a data service and as a notification service. These functions could instead be performed by two, three or four (or more) separate servers or computing devices.

In the claims which follow and in the preceding description of the invention, except where the context requires otherwise owing to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A communication system (10), comprising:
a first computing device (12) having a sensor (30, 30') and a display (26);
a second computing device (14) having a display (28);
a data service (44) configured to mediate communication between the first and second computing devices (12; 14);
wherein the first computing device (12) is configured to generate control data by decoding information embodied in a contactlessly readable identification device (48) scanned with the sensor (30, 30'), the identification device (48) having address data indicative of an authentication server (42) and identification data associated with a user of a second computing device (14), such that the control data comprises the address data and the identification data;
the first computing device (12) configured to:
a) respond to the control data by transmitting an authentication request to the authentication server (42), the authentication request comprising at least the identification data,
b) respond to receiving an authentication and/or access token from the authentication server (42) by transmitting a contact data request for contact data associated with the identification data to the data service (44), the contact data being configured to allow the first computing device (12) to establish communication with the second computing device (14), and the contact data request including the token, and
c) respond to receiving the contact data from the data service (44) by transmitting a communication request to the data service (44) according to the contact data,
**characterized in that**
the communication request is configured to prompt the data service (44) to generate and issue a user alert or notification identifying at least a mode of communication and a user operable acceptance mechanism (190, 192) operable to control the second computing device (14) to open or accept the mode of communication with the first computing device (12).

2. A system as claimed in claim 1, wherein the first computing device (12) is further configured to:
display on the display (26) a plurality of modes of communication (170, 172, 174, 176, 178) establishable between the first computing device (12) and the second computing device (14), and
receive user input indicative of a communication mode selection selected from the modes of communication (170, 172, 174, 176, 178),
wherein the mode of communication comprises the communication mode selection.

3. A system as claimed in either claim 1 or 2, wherein the communication request is configured to prompt the data service (44) to issue the user alert or notification by prompting a notification service (46) to issue the user alert or notification.

4. A system as claimed in any one of the preceding claims, wherein the first computing device (12) is configured
to respond to the control data by displaying on the display (26) a plurality of selectable establishable modes of communication (170, 172, 174, 176, 178) between the first and second computing devices (12; 14), and
to receive a user selection indicative of a selected mode of communication, wherein the first computing device (12) adapts the communication request to identify the selected mode of communication.

5. A system as claimed in any one of the preceding claims, wherein the first computing device (12) is configured to respond to the control data by displaying a list identifying one or more modes of communication comprising a video call (170), a voice call (172), text messaging (178), image messaging, and/or remote signing of a document, wherein the list preferably includes one or more specific modes of communication identified by the control data or the identification data .

6. A system as claimed in any one of the preceding claims, wherein the first computing device (12) is configured to further respond to the control data by downloading executable code to the first computing device (12) and executing the executable code, wherein the executable code configures the first computing device (12) to perform any one or more of steps (a) to (c).

7. A system as claimed in any one of the preceding claims, wherein
the sensor (30, 30') comprises a camera and the first computing device (12) is controllable to capture a video image or still image (264) of a document with the camera (30, 30') and to transmit to the second computing device (14) the image (264) of the document and an execution request, the execution request being configured to prompt the second computing device (14) to display the image (272) of the document and to issue a user alert or notification requesting execution of the document by digital or electronic signature, and
the first computing device (12) is configured to issue a user alert or notification confirming execution of the document in response to receiving an execution confirmation from the second computing device (14), and optionally to receive the digital or electronic signature and to store, or initiate storage of, the digital or electronic signature or a hash of the digital or electronic signature, in association with the image, a portion of the image, or a digital document of which the image is a representation, and, optionally, wherein
the second computing device (14) is configured to respond to receiving the execution request by displaying the image (272) of the document on the display (28) of the second computing device (14), and to receive user input comprising the digital or electronic signature inputted into the second computing device (14) by the user of the second computing device (14) while or after the second computing device (14) displays the image (272) of the document, and optionally to store, or initiate storage of, the digital or electronic signature or a hash of the digital or electronic signature, in association with the image, a portion of the image, or a digital document of which the image is a representation.

8. A communication method, comprising:
scanning a contactlessly readable identification device (48) with a sensor (30, 30') of a first computing device (12), the identification device (48) having address data indicative of an authentication server (42) and identification data associated with a user of a second computing device (14);
the first computing device (12) generating control data by decoding information scanned from the identification device (48), the control data comprising the address data and the identification data;
the first computing device (12) responding to the control data by transmitting an authentication request to an authentication server (42), the authentication request comprising at least the identification data;
the first computing device (12) responding to receiving an authentication and/or access token from the authentication server (42) by transmitting a contact data request for contact data associated with the identification data to a data service (44) configured to mediate communication between the first and second computing devices (12; 14), the contact data being configured to allow the first computing device (12) to establish communication with the second computing device (14), and the contact data request including the token;
the first computing device responding to receiving the contact data from the data service (44) by transmitting a communication request to the data service (44) according to the contact data,
**characterized by**
the data service (44) generating and issuing a user alert or notification identifying at least a mode of communication and a user operable acceptance mechanism (190,192) operable to control the second computing device (14) to open or accept the mode of communication with the first computing device (12) in response to a prompt by the communication request.

9. A method as claimed in claim 8, comprising:
the first computing device (12) displaying on the display (26) a plurality of modes of communication (170, 172, 174, 176, 178) establishable between the first computing device (12) and the second computing device (14), and
the first computing device (12) receiving user input indicative of a communication mode selection selected from the modes of communication (170, 172, 174,176, 178),
wherein the mode of communication comprises the communication mode selection.

10. A method as claimed in either claim 8 or 9, wherein the data service (33) issues the user alert or notification by prompting a notification service (46) to issue the user alert or notification in response to a prompt by the communication request.

11. A method as claimed in any one of claims 8 to 10, comprising the first computing device (12) responding to the control data by displaying on the display (26) a plurality of selectable establishable modes of communication (170, 172, 174, 176, 178) between the first and second computing devices (12; 14), and receiving a user selection indicative of a selected mode of communication, wherein the first computing device (12) adapts the communication request to identify the selected mode of communication.

12. A method as claimed in any one of claims 8 to 11, comprising the first computing device (12) responding to the control data by displaying a list identifying one or more modes of communication comprising a video call (170), a voice call (172), text messaging (178), image messaging, and/or remote signing of a document, wherein the list preferably includes, one or more specific modes of communication identified by the control data or the identification data.

13. A method as claimed in any one of claims 8 to 12, comprising the first computing device (12) further responding to the control data by downloading executable code to the first computing device (12) and executing the executable code, wherein the executable code configures the first computing device (12) to perform any one or more of the steps of the method.

14. A method as claimed in any one of claims 8 to 13, comprising the second computing device (14) displaying an identity of the first computing device (12) or of a user registered as associated therewith, such as in, or in association with, the user alert or notification.

15. A method as claimed in any one of claims 8 to 14, wherein the sensor (30, 30') comprises a camera and the method comprises
the first computing device (12) capturing a video image or still image (264) of a document with the camera (30, 30') and transmitting to the second computing device (14) the image (264) of the document and an execution request, the second computing device (14) displaying the image (272) of the document and issuing a user alert or notification requesting execution of the document by digital or electronic signature in response to a prompt by the execution request, and
the first computing device (12) issuing a user alert or notification confirming execution of the document in response to receiving an execution confirmation from the second computing device (14), and, optionally,
the second computing device (14) responding to receiving the execution request by displaying the image (272) of the document on a display (28) of the second computing device (14), and
the second computing device (14) receiving user input comprising the digital or electronic signature inputted into the second computing device (14) by the user of the second computing device (14) while or after the second computing device (14) displays the image (272) of the document.

## Patentansprüche

1. Kommunikationssystem (10), das Folgendes umfasst:
eine erste Rechenvorrichtung (12) mit einem Sensor (30, 30') und einer Anzeige (26);
eine zweite Rechenvorrichtung (14) mit einer Anzeige (28);
einen Datendienst (44), der zum Vermitteln einer Kommunikation zwischen der ersten und der zweiten Rechenvorrichtung (12; 14) konfiguriert ist;
wobei die erste Rechenvorrichtung (12) konfiguriert ist zum Erzeugen von Steuerdaten durch Dekodieren von Informationen, die in einer mit dem Sensor (30, 30') abgetasteten, berührungslos lesbaren Identifikationsvorrichtung (48) enthalten sind, wobei die Identifikationsvorrichtung (48) Adressdaten, die einen Authentifikationsserver (42) angeben, und Identifikationsdaten aufweist, die einem Benutzer einer zweiten Rechenvorrichtung (14) zugeordnet sind, so dass die Steuerdaten die Adressdaten und die Identifikationsdaten umfassen;
wobei die erste Rechenvorrichtung (12) konfiguriert ist zum:
a) Reagieren auf die Steuerdaten durch Übertragen einer Authentifikationsanforderung an den Authentifikationsserver (42), wobei die Authentifikationsanforderung zumindest die Identifikationsdaten umfasst,
b) Reagieren auf den Empfang eines Authentifikations- und/oder Zugriffs-Tokens vom Authentifikationsserver (42) durch Übertragen einer Kontaktdatenanforderung für den Identifikationsdaten zugeordnete Kontaktdaten an den Datendienst (44), wobei die Kontaktdaten dazu konfiguriert sind, der ersten Rechenvorrichtung (12) das Herstellen einer Kommunikation mit der zweiten Rechenvorrichtung (14) zu ermöglichen, und die Kontaktdatenanforderung das Token enthält, und
c) Reagieren auf den Empfang der Kontaktdaten vom Datendienst (44) durch Übertragen einer Kommunikationsanforderung an den Datendienst (44) entsprechend den Kontaktdaten,
**dadurch gekennzeichnet, dass**
die Kommunikationsanforderung dazu konfiguriert ist, den Datendienst (44) zum Erzeugen und Ausgeben einer Benutzerwarnung oder-benachrichtigung zu veranlassen, die zumindest einen Kommunikationsmodus und einen vom Benutzer bedienbaren Annahmemechanismus (190, 192) identifiziert, der dazu betreibbar ist, die zweite Rechenvorrichtung (14) so zu steuern, dass sie den Kommunikationsmodus mit der ersten Rechenvorrichtung (12) öffnet oder annimmt.

2. System nach Anspruch 1, bei dem die erste Rechenvorrichtung (12) ferner konfiguriert ist zum:
Anzeigen einer Mehrzahl von Kommunikationsmodi (170, 172, 174, 176, 178), die zwischen der ersten Rechenvorrichtung (12) und der zweiten Rechenvorrichtung (14) einrichtbar sind, auf der Anzeige (26) und
Empfang einer Benutzereingabe, die die Auswahl eines Kommunikationsmodus angibt, der aus den Kommunikationsmodi (170, 172, 174, 176, 178) ausgewählt ist,
wobei der Kommunikationsmodus den ausgewählten Kommunikationsmodus umfasst.

3. System nach Anspruch 1 oder 2, bei dem die Kommunikationsanforderung dazu konfiguriert ist, den Datendienst (44) zur Ausgabe der Benutzerwarnung oder-benachrichtigung zu veranlassen, indem ein Benachrichtigungsdienst (46) zum Ausgeben der Benutzerwarnung oder -benachrichtigung veranlasst wird.

4. System nach einem der vorhergehenden Ansprüche, bei dem die erste Rechenvorrichtung (12) konfiguriert ist zum
Reagieren auf die Steuerdaten durch Anzeigen einer Mehrzahl von auswählbaren einrichtbaren Kommunikationsmodi (170, 172, 174, 176, 178) zwischen der ersten und der zweiten Rechenvorrichtung (12; 14) auf der Anzeige (26) und
Empfang einer Benutzerauswahl, die einen ausgewählten Kommunikationsmodus angibt, wobei die erste Rechenvorrichtung (12) die Kommunikationsanforderung anpasst, um den ausgewählten Kommunikationsmodus zu identifizieren.

5. System nach einem der vorhergehenden Ansprüche, bei dem die erste Rechenvorrichtung (12) dazu konfiguriert ist, auf die Steuerdaten durch das Anzeigen einer Liste zu reagieren, die einen oder mehrere Kommunikationsmodi identifiziert, welche einen Videoanruf (170), einen Sprachanruf (172), Textnachrichten (178), Bildnachrichten und/oder das Fernsignieren eines Dokuments umfassen, wobei die Liste vorzugsweise einen oder mehrere spezifische Kommunikationsmodi enthält, die durch die Steuerdaten oder die Identifikationsdaten identifiziert werden.

6. System nach einem der vorhergehenden Ansprüche, bei dem die erste Rechenvorrichtung (12) dazu konfiguriert ist, auf die Steuerdaten ferner durch das Herunterladen von ausführbarem Code auf die erste Rechenvorrichtung (12) und Ausführen des ausführbaren Codes zu reagieren, wobei der ausführbare Code die erste Rechenvorrichtung (12) dazu konfiguriert, einen oder mehrere der Schritte (a) bis (c) durchzuführen.

7. System nach einem der vorhergehenden Ansprüche, bei dem
der Sensor (30, 30') eine Kamera umfasst und die erste Rechenvorrichtung (12) dazu steuerbar ist, ein Videobild oder Standbild (264) eines Dokuments mit der Kamera (30, 30') zu erfassen und das Bild (264) des Dokuments sowie eine Unterzeichnungsanforderung an die zweite Rechenvorrichtung (14) zu übertragen, wobei die Unterzeichnungsanforderung dazu konfiguriert ist, die zweite Rechenvorrichtung (14) zum Anzeigen des Bildes (272) des Dokuments und zum Ausgeben einer Benutzerwarnung oder -benachrichtigung zu veranlassen, die die Unterzeichnung des Dokuments durch digitale oder elektronische Signatur anfordert, und
die erste Rechenvorrichtung (12) konfiguriert ist zum Ausgeben einer Benutzerwarnung oder -benachrichtigung, die die Unterzeichnung des Dokuments bestätigt, als Reaktion auf den Empfang einer Unterzeichnungsbestätigung von der zweiten Rechenvorrichtung (14), und optional zum Empfang der digitalen oder elektronischen Unterschrift und zum Speichern, oder zum Einleiten der Speicherung, der digitalen oder elektronischen Unterschrift oder eines Hashs der digitalen oder elektronischen Unterschrift in Zuordnung zu dem Bild, einem Teil des Bildes oder einem digitalen Dokument, von dem das Bild eine Darstellung ist, und wobei optional
die zweite Rechenvorrichtung (14) konfiguriert ist zum Reagieren auf den Empfang der Unterzeichnungsanforderung durch Anzeigen des Bildes (272) des Dokuments auf der Anzeige (28) der zweiten Rechenvorrichtung (14) und zum Empfang einer Benutzereingabe, die die digitale oder elektronische Unterschrift umfasst, welche vom Benutzer der zweiten Rechenvorrichtung (14) in die zweite Rechenvorrichtung (14) eingegeben wird, während oder nachdem die zweite Rechenvorrichtung (14) das Bild (272) des Dokuments anzeigt, und optional zum Speichern, oderzum Einleiten der Speicherung, der digitalen oder elektronischen Unterschrift oder eines Hashs der digitalen oder elektronischen Unterschrift in Zuordnung zu dem Bild, einem Teil des Bildes oder einem digitalen Dokument, von dem das Bild eine Darstellung ist.

8. Kommunikationsverfahren, das Folgendes umfasst:
Abtasten einer berührungslos lesbaren Identifikationsvorrichtung (48) mit einem Sensor (30, 30') einer ersten Rechenvorrichtung (12), wobei die Identifikationsvorrichtung (48) Adressdaten, die einen Authentifikationsserver (42) angeben, und Identifikationsdaten, die einem Benutzer einer zweiten Rechenvorrichtung (14) zugeordnet sind, aufweist;
Erzeugen von Steuerdaten durch die erste Rechenvorrichtung (12) durch Dekodieren von Informationen, die aus der Identifikationsvorrichtung (48) abgetastet wurden, wobei die Steuerdaten die Adressdaten und die Identifikationsdaten umfassen;
Reaktion der ersten Rechenvorrichtung (12) auf die Steuerdaten durch Übertragen einer Authentifikationsanforderung an einen Authentifikationsserver (42), wobei die Authentifikationsanforderungzumindestdie Identifikationsdaten umfasst;
Reaktion der ersten Rechenvorrichtung (12) auf den Empfang eines Authentifikations- und/oder Zugriffs-Tokens vom Authentifikationsserver (42) durch Übertragen einer Kontaktdatenanforderung für den Identifikationsdaten zugeordnete Kontaktdaten an einen Datendienst (44), der dazu konfiguriert ist, die Kommunikation zwischen der ersten und der zweiten Rechenvorrichtung (12; 14) zu vermitteln, wobei die Kontaktdaten dazu konfiguriert sind, der ersten Rechenvorrichtung (12) das Herstellen einer Kommunikation mit der zweiten Rechenvorrichtung (14) zu ermöglichen, und die Kontaktdatenanforderung das Token enthält;
Reaktion der ersten Rechenvorrichtung auf den Empfang der Kontaktdaten von dem Datendienst (44) durch Übertragen einer Kommunikationsanforderung an den Datendienst (44) entsprechend den Kontaktdaten,
**dadurch gekennzeichnet, dass**
der Datendienst (44) eine Benutzerwarnung oder -benachrichtigung erzeugt und ausgibt, die zumindest einen Kommunikationsmodus und einen vom Benutzer bedienbaren Annahmemechanismus (190, 192) identifiziert, der dazu betreibbar ist, die zweite Rechenvorrichtung (14) so zu steuern, dass sie als Reaktion auf eine Aufforderung durch die Kommunikationsanforderung den Kommunikationsmodus mit der ersten Rechenvorrichtung (12) öffnet oder annimmt.

9. Verfahren nach Anspruch 8, umfassend:
Anzeigen einer Mehrzahl von Kommunikationsmodi (170, 172, 174, 176, 178), die zwischen der ersten Rechenvorrichtung (12) und der zweiten Rechenvorrichtung (14) einrichtbar sind, auf der Anzeige (26) durch die erste Rechenvorrichtung (12) und
Empfang einer Benutzereingabe, die die Auswahl eines Kommunikationsmodus angibt, der aus den Kommunikationsmodi (170, 172, 174, 176, 178) ausgewählt ist, durch die erste Rechenvorrichtung (12),
wobei der Kommunikationsmodus den ausgewählten Kommunikationsmodus umfasst.

10. Verfahren nach Anspruch 8 oder 9, bei dem der Datendienst (33) die Benutzerwarnung oder -benachrichtigung ausgibt, indem ein Benachrichtigungsdienst (46) als Reaktion auf eine Aufforderung durch die Kommunikationsanforderung zum Ausgeben der Benutzerwarnung oder -benachrichtigung veranlasst wird.

11. Verfahren nach einem der Ansprüche 8 bis 10, bei dem die erste Rechenvorrichtung (12) auf die Steuerdaten durch das Anzeigen einer Mehrzahl von auswählbaren einrichtbaren Kommunikationsmodi (170, 172, 174, 176, 178) zwischen der ersten und derzweiten Rechenvorrichtung (12; 14) auf der Anzeige (26) reagiert und eine Benutzerauswahl empfängt, die einen ausgewählten Kommunikationsmodus angibt, wobei die erste Rechenvorrichtung (12) die Kommunikationsanforderung anpasst, um den ausgewählten Kommunikationsmodus zu identifizieren.

12. Verfahren nach einem der Ansprüche 8 bis 11, das umfasst, dass die erste Rechenvorrichtung (12) auf die Steuerdaten durch das Anzeigen einer Liste reagiert, die einen oder mehrere Kommunikationsmodi identifiziert, welche einen Videoanruf (170), einen Sprachanruf (172), Textnachrichten (178), Bildnachrichten und/oder das Fernsignieren eines Dokuments umfassen, wobei die Liste vorzugsweise einen oder mehrere spezifische Kommunikationsmodi enthält, die durch die Steuerdaten oder die Identifikationsdaten identifiziert werden.

13. Verfahren nach einem der Ansprüche 8 bis 12, das umfasst, dass die erste Rechenvorrichtung (12) auf die Steuerdaten ferner durch das Herunterladen von ausführbarem Code auf die erste Rechenvorrichtung (12) und Ausführen des ausführbaren Codes reagiert, wobei der ausführbare Code die erste Rechenvorrichtung (12) dazu konfiguriert, einen oder mehrere der Schritte des Verfahrens durchzuführen.

14. Verfahren nach einem der Ansprüche 8 bis 13, das das Anzeigen einer Identität der ersten Rechenvorrichtung (12) oder eines Benutzers, der als derselben zugeordnet registriert ist, durch die zweite Rechenvorrichtung (14), beispielsweise in oder in Verbindung mit der Benutzerwarnung oder-benachrichtigung, umfasst.

15. Verfahren nach einem der Ansprüche 8 bis 14, bei dem der Sensor (30, 30') eine Kamera umfasst und das Verfahren Folgendes umfasst:
durch die erste Rechenvorrichtung (12), Erfassen eines Videobildes oder Standbildes (264) eines Dokuments mit der Kamera (30, 30') und Übertragen des Bildes (264) des Dokuments sowie einer Unterzeichnungsanforderung an die zweite Rechenvorrichtung (14), wobei die zweite Rechenvorrichtung (14) das Bild (272) des Dokuments anzeigt und eine Benutzerwarnung oder -benachrichtigung ausgibt, die die Unterzeichnung des Dokuments durch digitale oder elektronische Signatur als Reaktion auf eine Aufforderung durch die Unterzeichnungsanforderung anfordert, und
Ausgeben einer Benutzerwarnung oder -benachrichtigung, die die Unterzeichnung des Dokuments bestätigt, durch die erste Rechenvorrichtung (12), als Reaktion auf den Empfang einer Unterzeichnungsbestätigung von der zweiten Rechenvorrichtung (14) und optional
Reaktion der zweiten Rechenvorrichtung (14) auf den Empfang der Unterzeichnungsanforderung durch Anzeigen des Bildes (272) des Dokuments auf einer Anzeige (28) der zweiten Rechenvorrichtung (14) und
Empfang einer Benutzereingabe, die die digitale oder elektronische Unterschrift umfasst, welche vom Benutzer der zweiten Rechenvorrichtung (14) in die zweite Rechenvorrichtung (14) eingegeben wird, während oder nachdem die zweite Rechenvorrichtung (14) das Bild (272) des Dokuments anzeigt, durch die zweite Rechenvorrichtung.

## Revendications

1. Système de communication (10), comprenant :
un premier dispositif informatique (12) possédant un capteur (30, 30') et un afficheur (26) ;
un second dispositif informatique (14) possédant un écran (28) ;
un service de données (44) configuré afin d'assurer un lien pour la communication entre le premier et le second dispositif informatique (12 ; 14) ;
dans lequel le premier dispositif informatique (12) est configuré afin de générer des données de contrôle par des informations de décodage incorporées dans un dispositif d'identification lisible sans contact (48) scanné avec le capteur (30, 30'), le dispositif d'identification (48) possédant des données d'adresse indicatrices d'un serveur d'authentification (42) et des données d'identification associées à un utilisateur d'un second dispositif informatique (14) de sorte que les données de contrôle comprennent les données d'adresse et les données d'identification ;
le premier dispositif informatique (12) étant configuré pour:
a) répondre aux données de contrôle par la transmission d'une demande d'authentification au serveur d'authentification (42), la demande d'authentification comprenant au moins les données d'identification,
b) répondre à la réception d'un jeton d'authentification et/ou d'accès provenant du serveur d'authentification (42) par la transmission au service de données (44) d'une demande de données de contact relative aux données de contact associées aux données d'identification, les données de contact étant configurées afin de permettre au premier dispositif informatique (12) d'établir une communication avec le second dispositif informatique (14), et la demande de données de contact comportant le jeton, et
c) répondre à la réception des données de contact provenant du service de données (44) par la transmission d'une demande de communication au service de données (44) selon les données de contact,
**caractérisé en ce que**
la demande de communication est configurée afin d'inviter le service de données (44) à générer et à émettre une alerte ou une notification d'utilisateur identifiant au moins un mode de communication et un mécanisme d'acceptation actionnable par un utilisateur (190,192), actionnable afin de contrôler le second dispositif informatique (14) pour ouvrir ou accepter le mode de communication avec le premier dispositif informatique (12).

2. Système tel que revendiqué dans la revendication 1, dans lequel le premier dispositif informatique (12) est par ailleurs configuré pour :
afficher à l'écran (26) une pluralité de modes de communication (170, 172, 174, 176, 178) établissables entre le premier dispositif informatique (12) et le second dispositif informatique (14), et
recevoir une entrée d'utilisateur indicatrice d'une sélection de mode de communication sélectionnée parmi les modes de communication (170, 172, 174, 176, 178),
dans lequel le mode de communication comprend la sélection de mode de communication.

3. Système tel que revendiqué soit dans la revendication 1, soit dans la 2, dans lequel la demande de communication est configurée afin d'inviter le service de données (44) à émettre l'alerte ou la notification d'utilisateur en invitant un service de notification (46) à émettre l'alerte ou la notification d'utilisateur.

4. Système tel que revendiqué dans une quelconque des revendications précédentes, dans lequel le premier dispositif informatique (12) est configuré :
pour répondre aux données de contrôle en affichant à l'écran (26) une pluralité de modes de communication (170, 172, 174, 176, 178) établissables et sélectionnables entre le premier et le second dispositif informatique (12 ; 14), et
pour recevoir une sélection d'utilisateur indicatrice d'un mode de communication sélectionné, dans lequel le premier dispositif informatique (12) adapte la demande de communication afin d'identifier le mode de communication sélectionné.

5. Système tel que revendiqué dans une quelconque des revendications précédentes, dans lequel le premier dispositif informatique (12) est configuré afin de répondre aux données de contrôle par affichage d'une liste identifiant un ou plusieurs modes de communication comprenant un appel vidéo (170), un appel vocal (172), une messagerie texte (178), une messagerie image et/ou la signature à distance d'un document, dans lequel la liste comporte de préférence un ou plusieurs modes de communication spécifiques identifiés par les données de contrôle ou les données d'identification.

6. Système tel que revendiqué dans une quelconque des revendications précédentes, dans lequel le premier dispositif informatique (12) est configuré afin de répondre par ailleurs aux données de contrôle en téléchargeant un code exécutable vers le premier dispositif informatique (12) et en exécutant le code exécutable, dans lequel le code exécutable configure le premier dispositif informatique (12) afin de réaliser une ou plusieurs des étapes (a) à (c).

7. Système tel que revendiqué dans une quelconque des revendications précédentes, dans lequel
le capteur (30, 30') comprend une caméra et le premier dispositif informatique (12) est contrôlable afin de capturer une image vidéo ou une image fixe (264) d'un document avec la caméra (30, 30') et afin de transmettre au second dispositif informatique (14) l'image (264) du document et une demande d'exécution, la demande d'exécution étant configurée afin d'inviter le second dispositif informatique (14) à afficher l'image (272) du document et à émettre une alerte ou une notification d'utilisateur demandant l'exécution du document par une signature numérique ou électronique, et
le premier dispositif informatique (12) est configuré afin d'émettre une alerte ou une notification d'utilisateur confirmant l'exécution du document en réponse à la réception d'une confirmation d'exécution provenant du second dispositif informatique (14), et en option afin de recevoir la signature numérique ou électronique et de stocker ou de lancer le stockage de la signature numérique ou électronique ou d'un hachage de la signature numérique ou électronique, en association avec l'image, une partie de l'image, ou un document numérique dont l'image est une représentation, et, en option, dans lequel
le second dispositif informatique (14) est configuré afin de répondre à la réception de la demande d'exécution par affichage de l'image (272) du document à l'écran (28) du second dispositif informatique (14), et afin de réceptionner l'entrée d'utilisateur comprenant la signature numérique ou électronique entrée dans le second dispositif informatique (14) par l'utilisateur du second dispositif informatique (14) pendant ou après que le second dispositif informatique (14) affiche l'image (272) du document, et en option afin de stocker ou de lancer le stockage de la signature numérique ou électronique ou d'un hachage de la signature numérique ou électronique, en association avec l'image, une partie de l'image ou un document numérique dont l'image est une représentation.

8. Méthode de communication, comprenant :
la numérisation d'un dispositif d'identification lisible sans contact (48) avec un capteur (30, 30') d'un premier dispositif informatique (12), le dispositif d'identification (48) possédant des données d'adresse indicatrices d'un serveur d'authentification (42) et des données d'identification associées à un utilisateur d'un second dispositif informatique (14) ;
le premier dispositif informatique (12) générant des données de contrôle en décodant les informations numérisées provenant du dispositif d'identification (48), les données de contrôle comprenant les données d'adresse et les données d'identification ;
le premier dispositif informatique (12) répondant aux données de contrôle en transmettant une demande d'authentification à un serveur d'authentification (42), la demande d'authentification comprenant au moins les données d'identification ;
le premier dispositif informatique (12) répondant à la réception d'un jeton d'authentification et/ou d'accès provenant du serveur d'authentification (42) en transmettant à un service de données (44) configuré afin d'assurer un lien pour la communication entre le premier et le second dispositif informatique (12 ; 14) une demande de données de contact relative à des données de contact associées aux données d'identification, les données de contact étant configurées afin de permettre au premier dispositif informatique (12) d'établir une communication avec le second dispositif informatique (14), et la demande de données de contact comportant le jeton ; et
le premier dispositif informatique répondant à la réception des données de contact provenant du service de données (44) par la transmission d'une demande de communication au service de données (44) selon les données de contact,
**caractérisée par**
le service de données (44) générant et émettant une alerte ou une notification d'utilisateur identifiant au moins un mode de communication et un mécanisme d'acceptation actionnable par un utilisateur (190,192) actionnable afin de contrôler le second dispositif informatique (14) afin d'ouvrir ou d'accepter le mode de communication avec le premier dispositif informatique (12) en réponse à une invitation par la demande de communication.

9. Méthode telle que revendiquée dans la revendication 8, comprenant :
le premier dispositif informatique (12) affichant à l'écran (26) une pluralité de modes de communication (170, 172, 174, 176, 178) établissables entre le premier dispositif informatique (12) et le second dispositif informatique (14), et
le premier dispositif informatique (12) recevant une entrée d'utilisateur indicatrice d'une sélection de mode de communication sélectionnée parmi les modes de communication (170, 172, 174, 176, 178),
dans lequel le mode de communication comprend la sélection du mode de communication.

10. Méthode telle que revendiquée soit dans la revendication 8, soit dans la revendication 9, dans laquelle le service de données (33) émet l'alerte ou la notification d'utilisateur en invitant un service de notification (46) à émettre l'alerte ou la notification d'utilisateur en réponse à une invitation par la demande de communication.

11. Méthode telle que revendiquée dans une quelconque des revendications 8 à 10, comprenant le premier dispositif informatique (12) répondant aux données de contrôle en affichant à l'écran (26) une pluralité de modes de communication sélectionnables (170, 172, 174, 176, 178) entre le premier et le second dispositifs informatiques (12 ; 14), et recevant une sélection d'utilisateur indicatrice d'un mode de communication sélectionné, dans laquelle le premier dispositif informatique (12) adapte la demande de communication afin d'identifier le mode de communication sélectionné.

12. Méthode telle que revendiquée dans une quelconque des revendications 8 à 11, comprenant le premier dispositif informatique (12) répondant aux données de contrôle en affichant une liste identifiant un ou plusieurs modes de communication comprenant un appel vidéo (170), un appel vocal (172), une messagerie texte (178), une messagerie image, et/ou la signature à distance d'un document, dans laquelle la liste comporte de préférence un ou plusieurs modes de communication spécifiques identifiés par les données de contrôle ou les données d'identification.

13. Méthode telle que revendiquée dans une quelconque des revendications 8 à 13, comprenant le premier dispositif informatique (12) répondant par ailleurs aux données de contrôle en téléchargeant un code exécutable vers le premier dispositif informatique (12) et en exécutant le code exécutable, dans lequel le code exécutable configure le premier dispositif informatique (12) afin d'exécuter une ou plusieurs des étapes de la méthode.

14. Méthode telle que revendiquée dans une quelconque des revendications 8 à 13, comprenant le second dispositif informatique (14) affichant une identité du premier dispositif informatique (12) ou d'un utilisateur enregistré comme associé à celui-ci, par exemple dans l'alerte ou la notification d'utilisateur ou en association avec celles-ci.

15. Méthode telle que revendiquée dans une quelconque des revendications 8 à 14, dans laquelle le capteur (30, 30') comprend une caméra et la méthode comprend :
le premier dispositif informatique (12) capturant une image vidéo ou une image fixe (264) d'un document avec la caméra (30, 30') et transmettant au second dispositif informatique (14) l'image (264) du document et une demande d'exécution, le second dispositif informatique (14) affichant l'image (272) du document et émettant une alerte ou une notification utilisateur demandant l'exécution du document par une signature numérique ou électronique en réponse à une invitation par la demande d'exécution, et
le premier dispositif informatique (12) émettant une alerte ou une notification d'utilisateur confirmant l'exécution du document en réponse à la réception d'une confirmation d'exécution provenant du second dispositif informatique (14), et en option, le second dispositif informatique (14) répondant à la réception de la demande d'exécution par l'affichage de l'image (272) du document sur un écran (28) du second dispositif informatique (14), et
le second dispositif informatique (14) recevant une entrée d'utilisateur comprenant la signature numérique ou électronique entrée dans le second dispositif informatique (14) par l'utilisateur du second dispositif informatique (14) pendant ou après que le second dispositif informatique (14) affiche l'image (272) du document.
